# EUROPÄISCHE PATENTSCHRIFT

(11) **EP 0 454 662 B1**
(45) Veröffentlichungstag und Bekanntmachung des Hinweises auf die Patenterteilung: **27.10.1993**
(21) Anmeldenummer: 91890089.5
(22) Anmeldetag: 25.04.1991
(51) Int. Cl.: B65G 51/32

(54) **Rohrpoststation**
Pneumatic tube conveyor station
Poste de courrier par tube

(30) Priorität: 25.04.1990 AT 958/90
(43) Veröffentlichungstag der Anmeldung: 30.10.1991
(73) Patentinhaber: Sumetzberger, Walter, A-1110 Wien (AT)
(72) Erfinder: Muik, Peter, A-2301 Gross Enzersdorf 17/1 (AT)
(74) Vertreter: Müllner, Erwin, Dr.

(56) Entgegenhaltungen:
- DE-A- 3 817 949
- DE-B- 1 255 046
- DE-U- 8 010 799

## Beschreibung

Die vorliegende Erfindung betrifft eine Rohrpoststation mit einem zwischen zwei ortsfesten Platten angeordneten ersten Rotor, der mindestens einen Rohrabschnitt aufweist, und einem zweiten Rotor , der unabhängig vom ersten Rotor drehbar ist und einen Rohrabschnitt aufweist, der zur Beladung ausgebildet ist.

Aus der DE-OS 38 17 949 ist eine Rohrpoststation bekannt, bei der beim Einschleusen die Beladung von oben erfolgt: in der oberen Platte ist eine Beladeöffnung vorgesehen. Zum Beladen dreht man den Durchfahrtsrohrabschnitt unter dieser Beladeöffnung und wirft eine Büchse ein, so daß diese auf die untere Platte fällt. Nun dreht man den Durchfahrtsrohrabschnitt in die Durchfahrtsstellung, und die Büchse wird von dem Luftstrom, der im Rohrsystem herrscht, befördert und weil das Hochheben zu anstrengend ist.

Aus der DE-AS 1 255 046 ist eine Rohrpoststation zum wahlweisen Empfangen, Absenden und Passierenlassen von Rohrpostbüchsen in beiden Richtungen bekannt, die aus einem verschließbaren Gehäuse besteht, bei dem an gegenüberliegenden Seiten die Enden der Fahrrohre eingeführt sind, die durch ein schwenkbares erstes Rohrstück miteinander verbunden sind, wobei ein weiteres Rohrstück, das zur Aufnahme einer abzusendenden Büchse bestimmt ist, an die Stelle des ersten Rohrstücks geschwenkt werden kann, und ein Einführungsstutzen für abzusendende Büchsen durch eine Verriegelungseinrichtung bei ausgeschwenktem Zustand des zur Aufnahme der abzusendenden Büchse bestimmten Rohrstückes verschließbar ist. Das erste Rohrstück kann unabhängig vom zweiten geschwenkt werden, während das zweite Rohrstück beim Absenden einer in ihm befindlichen Büchse das erste Rohrstück aus einer Lage zwischen den Rohrenden schiebt und an dessen Stelle tritt, bis die Büchse aus ihm ausgetreten ist. Auch bei dieser Rohrpoststation erfolgt die Beladung von oben.

Diese Art der Beschickung ist für schwere Büchsen (z.B. 15 kg) nicht geeignet, weil beim Einwerfen zu hohe Erschütterungen auftreten.

Für schwere Büchsen wurden daher Rohrpoststationen mit Frontbeladung entwickelt, bei denen ein Rohrabschnitt eine seitliche Öffnung aufweist, so daß eine Büchsevon vorne eingestellt werden kann. Bei diesen Rohrpoststationen kann aber immer nur bei einer bestimmten Betriebsbedingung (z. B. Durchfahren einer Büchse) eine wegzusendende Büchse eingestellt werden, so daß sich im Betrieb lästige Wartezeiten ergeben.

Es ist daher Aufgabe der vorliegenden Erfindung, eine Rohrpoststation der eingangs genannten Art für eine Frontbeladung geeignet zu machen, wobei es unabhängig davon, ob die Rohrpoststation gerade eine Büchse empfängt oder ob eine Büchse durchfahren soll, immer möglich sein soll, eine wegzuschickende Büchse einzustellen.

Diese Aufgabe wird bei einer Rohrpoststation der eingangs genannten Art erfindungsgemäß dadurch gelöst, daß der Rohrabschnitt zur Frontbeladung eine seitliche Öffnung aufweist und der erste Rotor zwei Rohrabschnitte, nämlich einen Durchfahrtsrohrabschnitt und einen Bremsrohrabschnitt, aufweist.

Erfindungsgemäß ist der Rohrabschnitt, der die seitliche Öffnung zur Frontbeladung hat, also auf einem eigenen Rotor angeordnet. Wie aus der Figurenbeschreibung hervorgehen wird, kann dadurch sowohl bei Empfangsstellung als auch bei Durchfahrtsstellung des ersten Rotors eine Büchse eingestellt werden, so daß Wartezeiten enfallen.

Es ist zweckmäßig, wenn der zweite Rotor sowohl an einer der beiden ortsfesten Platten oder einem mit diesen fest verbundenen Element als auch an dem ersten Rotor, beispielsweise durch je einen Elektromagnet, fixierbar ist. Auf diese Weise ist kein Antrieb für den zweiten Rotor notwendig: soll er gedreht werden, fixiert man ihn einfach am ersten Rotor und treibt diesen an; soll der erste Rotor unabhängig vom zweiten Rotor gedreht werden, fixiert man den zweiten Rotor an einem ortsfeste Element, z. B. an einer der beiden Platten oder am Gehäuse.

Vorzugsweise ist mit dem zweiten Rotor ein Zylindermantelabschnitt verbunden, der den ersten Rotor bei entsprechender Stellung der beiden Rotoren umgreift. Wie ebenfalls beim Lesen der Figurenbeschreibung hervorgehen wird, wird dadurch die Öffnung, die beim Drehen des zweiten Rotors entstünde, verschlossen. Ein Eingreifen bzw. Einbringen von Gegenständen in das Stationsinnere ist dadurch unmöglich.

Anhand der beiliegenden Zeichnungen wird die Erfindung näher erläutert. Die Fig. 1 bis 4 zeigen verschiedene Stellungen eines Ausführungsbeispieles der vorliegenden Erfindung, jeweils in perspektivischer Explosionsdarstellung, und zwar zeigt Fig. 1 die Durchfahrtsstellung, Fig. 2 die Empfangsstellung, Fig. 3 die Auswurfstellung und Fig. 4 die Sendestellung. Die Fig. 5 zeigt einenzweiten Rotor, der mit einem Zylindermantelabschnitt verbunden ist.

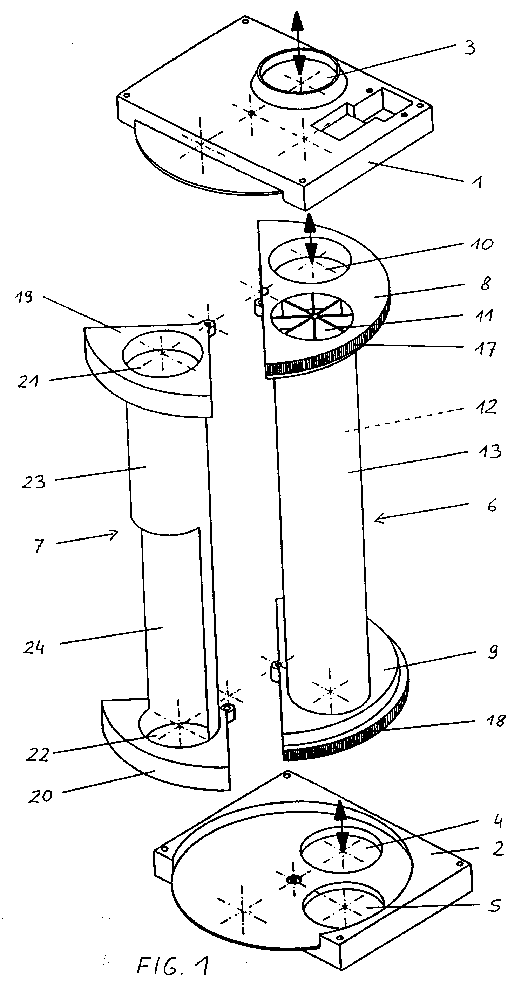

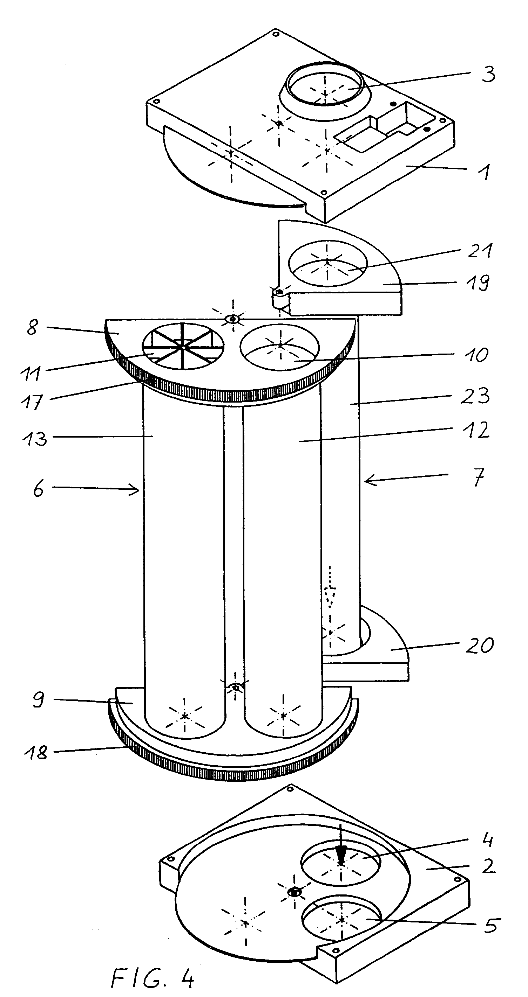

Die in den Fig. 1 bis 4 dargestellte Rohrpoststation weist eine obere feste Platte 1 und eine untere feste Platte 2 auf. Die obere Platte 1 weist eine Öffnung 3 auf, die zum Anschluß an ein Rohr der Rohrpostanlage bestimmt ist. Die untere Platte 2 weist zwei Öffnungen 4, 5 auf; eine der beiden Öffnungen, nämlich 4, liegt genau unter der Öffnung 3 der oberen Platte 1 und ist ebenfalls zum Anschluß an ein Rohr der Rohrpostanlage bestimmt. Die Öffnung 5 dient zur Ausgabe von empfangenen Büchsen; unter dieser Öffnung wird zweckmäßigerweise ein Auffangbehälter angebracht.

Zwischen diesen beiden Platten 2, 3 ist ein erster Rotor 6 drehbar angeordnet. Dieser Rotor weist eine halbkreisförmige obere Drehplatte 8 und eine halbkreisförmige untere Drehplatte 9 auf. Die obere Drehplatte 8 weist zwei Öffnungen 10, 11 auf. Die untere Drehplatte 9 weist ebenfalls zwei Öffnungen auf, jedoch sind diese in den Figuren nicht sichtbar. Diese Öffnungen liegen jeweils untereinander und sind bezüglich der Drehachse des Rotors 6 um 90° zueinander versetzt. Auch die beiden Öffnungen 4, 5 in der unteren festen Platte 2 sind bezüglich der Drehachse des Rotors 6 um 90° versetzt, so daß es eine Stellung des Rotors 6 gibt, in der die Öffnungen der unteren Drehplatte 9 genau über den Öffnungen 4, 5 der unteren Platte 2 liegen.

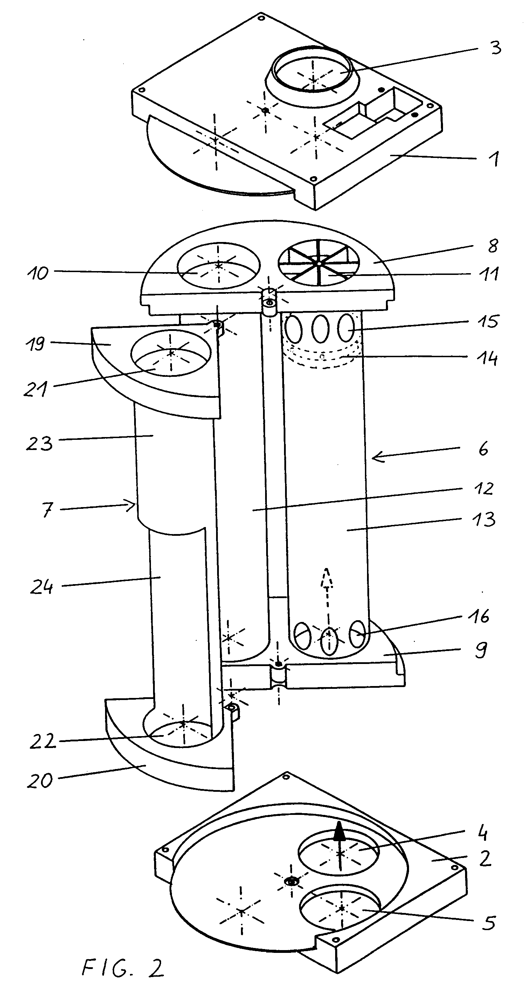

Die Öffnungen der beiden Drehplatten 8, 9 sind durch zwei Rohrabschnitte 12, 13 miteinander verbunden. Knapp unter dem oberen Ende des Rohrabschnittes 13 ist eine luftdichte Unterbrechung 14 (siehe Fig. 2) vorgesehen, so daß keine Büchse hindurchgelangen kann. Damit der Luftstrom nicht unterbrochen wird, weist dieser Rohrabschnitt 13 außerdem an seinem oberen und an seinem unteren Ende, also oberhalb und unterhalb der luftdichten Unterbrechung 14, Öffnungen 15 bzw. 16 auf, durch die Luft strömen kann. (Diese Öffnungen 15, 16 und die Unterbrechung 14 sind nur in Fig. 2 dargestellt.)

Zum Antrieb des Rotors 8 kann die obere und/oder die untere Drehplatte 8 bzw. 9 außen eine Verzahnung 17 bzw. 18 aufweisen, in die ein Zahnrad eines nicht dargestellten Elektromotors eingreifen kann.

Zwischen den beiden festen Platte 1, 2 befindet sich auch ein zweiter Rotor 7. Dieser Rotor weist eine viertelkreisförmige obere Drehplatte 19 und eine viertelkreisförmige untere Drehplatte 20 auf. Die Drehachsen des ersten Rotors 6 und des zweiten Rotors 7 fallen zusammen. In der oberen Drehplatte 19 und in der unteren Drehplatte 20 sind Öffnungen 21 und 22 übereinander angeordnet, die durch einen geraden Rohrabschnitt 23 miteinander verbunden sind. Dieser Rohrabschnitt weist eine seitliche Öffnung 24 auf, so daß eine Büchse von vorne eingesetzt werden kann.

Die gesamte Rohrpoststation ist in der Praxis natürlich in einem Gehäuse eingebaut, das nur im Bereich der Öffnung 24 eine Öffnung aufweist, die durch eine Tür verschließbar sein kann. Weiters ist in den Figuren nicht dargestellt, daß der gesamte Rotor 13 luftdicht ummantelt ist, d. h. es ist zwischen den beiden Drehplatten 8, 9 ein Mantel vorgesehen, der beide Rohrabschnitte 13, 14 luftdicht umgibt. (bei Darstellung dieses Mantels waren die Rohrabschnitte 13, 14 nicht mehr sichtbar.)

Die dargestellte Rohrpoststation arbeitet wie folgt:

In der in Fig. 1 dargestellten Durchfahrtstellung werden die an die Öffnungen 3 und 4 angeschlossenen Rohre der Rohrpostanlage durch den Durchfahrtsrohrabschnitt 12 miteinander verbunden. Büchsen können daher auf geradem Weg die Rohrpoststation durchfahren. Eine Beladung des Rohrabschnittes 23 ist möglich.

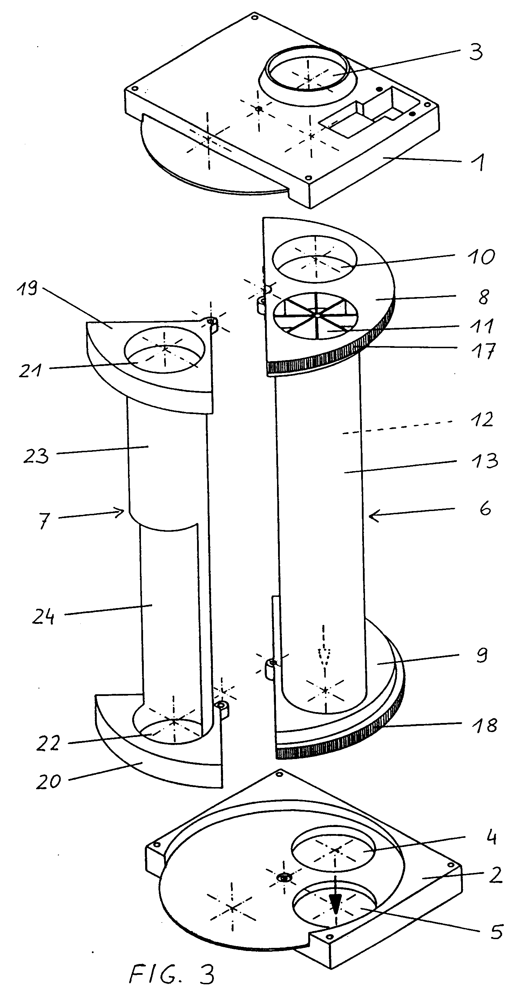

Um eine Büchse zu empfangen (siehe Fig. 2), wird der erste Rotor 6 um 90° verdreht. Um ein zufälliges Verdrehen des zweiten Rotors 7 zu verhindern, ist dieser durch einen Elektromagnet an der oberen oder an der unteren Platte 1 bzw. 2 z. B. durch einen Elektromagnet fixiert. Nun befindet sich über der Öffnung 4 der unteren festen Platte 2 der Bremsrohrabschnitt 13. Solang sich die Büchse noch im Rohrsystem befindet, strömt die Druckluft, die die Büchse antreibt, durch die Öffnungen 16 und 15 um die Unterbrechung 14 herum. (Der gesamte Rotor 6 ist - wie bereits erwähnt - von einem luftdichten, nicht dargestellten Mantel umgeben, sodaß die Druckluft nicht entweichen kann.) Sobald der Dichtring der Hülse die unteren Öffnungen 16 passiert, baut die Büchse vor sich einen Überdruck auf, da ja die Unterbrechung 14 luftdicht ist. Auf diese Weise wird die Büchse pneumatisch gebremst, bis sie an der Unterbrechnung 14 anschlägt. (Diese Unterbrechung kann natürlich - um stärkere Erschütterungen zu vermeiden - gepolstert sein.) Nun wird die Hülse durch eine mechanische Haltevorrichtung in dieser Position gehalten. Die Haltevorrichtung kann z. B. durch eine Lichtschranke oder eine Anschlagleiste ausgelöst werden. Der Luftstrom - der noch immer über die Öffnungen 16 und 15 geschlossen ist - kann jetzt abgeschaltet werden. Dann wird der erste Rotor 6 in die in Fig. 3 dargestellte Stellung bewegt, die der in Fig. 1 dargestellten Stellung entspricht. Die Hülse fällt nun durch die Öffnung 5 in der unteren festen Platte 2 heraus.

Während des gesamten Empfangsvorganges wurde der zweite Rotor 7 nicht bewegt, sodaß in den Rohrabschnitt 23 jederzeit eine abzusendende Hülse eingelegt werden konnte. Der zweite Rotor 7 war die ganze Zeit fixiert.

Soll eine Hülse, die in den Rohrabschnitt 23 eingelegt wurde, abgeschickt werden, muß der zweite Rotor 7 um 180° gedreht werden. Da bei diesem Ausführungsbeispiel der zweite Rotor 7 keinen eigenen Antrieb aufweist, wird zunächst der erste Rotor 6 in die in Fig. 2 dargestellte Stellung gebracht, und dann wird der zweite Rotor 7 z. B. durch einen Elektromagnet am ersten Rotor 6 fixiert. Nun wird der erste Rotor 6 und mit ihm der zweite Rotor 7 um 180° gedreht, so daß die Büchse in das Rohr der Rohrpostanlage fällt, das an die Öffnung 4 in der festen unteren Platte 2 angeschlossen ist. Anschließend werden die beiden Rotoren 6, 7 zurückgedreht, die Fixierung zwischen den beiden Rotoren 6, 7 wird gelöst und der zweite Rotor 7 wird wieder am Gehäuse fixiert. Nun wird der erste Rotor 6 in die in Fig. 1 gezeigte Durchfahrtstellung gebracht. Jetzt wird die Druckluft eingeschaltet und die Büchse in der gewünschten Richtung transportiert.

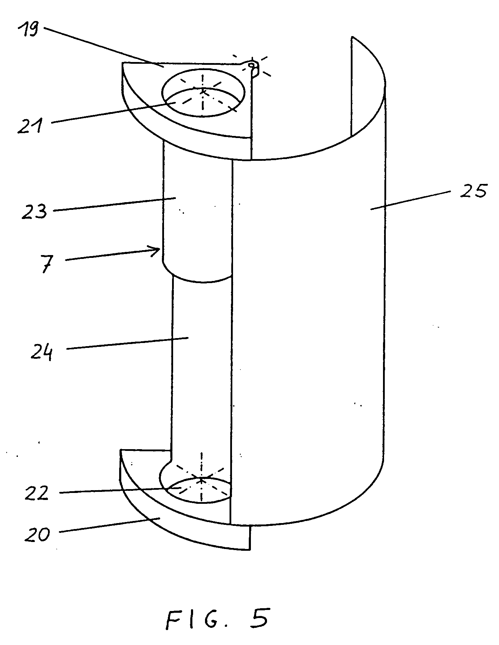

In Fig. 5 ist ein zweiter Rotor 7 dargestellt, an dem ein Zylindermantelabschnitt 25 angebracht ist. Dieser Zylindermantelabschnitt ist etwa halbzylinderförmig, so daß dieser Zylindermantelabschnitt die Öffnung im Gehäuse abdeckt, wenn der zweite Rotor 7 verdreht wird. Dieser Zylindermantelabschnitt 25 umgreift den ersten Rotor 6 mehr oder weniger weit, je nach der Stellung der beiden Rotoren zueinander. Es gibt also keine Kollision. Wenn der oben erwähnte (jedoch nicht dargestellte) luftdichte Mantel des ersten Rotors entsprechend ausgebildet ist, kann er die Funktion des Abdeckens der Gehäuseöffnung teilweise übernehmen, so daß es dann genügt, wenn der Zylindermantelabschnitt 25 nur viertelzylinderförmig ist.

Selbstverständlich kann die erfindungsgemäße Rohrpoststation nicht nur manuell, sondern auch durch Beschickungsautomaten bzw. Hülsenmagazine, die gleichzeitig mehrere Hülsen aufnehmen können, beschickt werden.

## Patentansprüche

1. Rohrpoststation mit einem zwischen zwei ortsfesten Platten (1, 2) angeordneten ersten Rotor (6), der mindestens einen Rohrabschnitt aufweist, und einem zweiten Rotor (7), der unabhängig vom ersten Rotor (6) drehbar ist und einen Rohrabschnitt (23) aufweist, der zur Beladung ausgebildet ist, dadurch gekennzeichnet, daß der Rohrabschnitt (23) zur Frontbeladung eine seitliche Öffnung (24) aufweist und der erste Rotor (6) zwei Rohrabschnitte (12,13), nämlich einen Durchfahrtsrohrabschnitt und einen Bremsrohrabschnitt aufweist.

2. Rohrpoststation nach Anspruch 1, dadurch gekennzeichnet, daß der zweite Rotor (7) sowohl an einer der beiden ortsfesten Platten (1, 2) oder einem mit diesen fest verbundenen Element als auch an dem ersten Rotor (6), beispielsweise durch je einen Elektromagnet, fixierbar ist.

3. Rohrpoststation nach Anspruch 1 oder 2, dadurch gekennzeichnet, daß mit dem zweiten Rotor (7) ein Zylindermantelabschnitt (25) verbunden ist, der den ersten Rotor (6) bei entsprechender Stellung der beiden Rotoren (6, 7) umgreift.

## Claims

1. Pneumatic post station with a first rotor (6) arranged between two fixed plates (1, 2), which has at least one tube section, and a second rotor (7), which is rotatable independently of the first rotor (6) and has a tube section (23), which is designed for loading, characterised in that the tube section (23) has a lateral opening (24) for front loading and the first rotor (6) has two tube sections (12, 13), namely a passage tube section and a brake tube section.

2. Pneumatic post station according to claim 1, characterised in that the second rotor (7) is fixable not only to one of the two fixed plates (1, 2) or an element firmly connected thereto but also to the first rotor, for example, by an electromagnet in each case.

3. Pneumatic post station according to claim 1 or 2, characterised in that a cylinder case section (25) is connected to the second rotor (7), which cylinder case section (25) engages around the first rotor (6) on an appropriate positioning of the two rotors (6, 7).

## Revendications

1. Station à poste tubulaire comprenant un premier rotor (6) disposé entre deux plateaux intégrés (1, 2) et muni d'au moins un tronçon tubulaire et un deuxième rotor (7) susceptible de tourner indépendamment du premier rotor (6) et muni d'un tronçon de tube (23) prévu pour recevoir une charge, caractérisée en ce que le tronçon de tube (23) comporte une ouverture latérale (24) pour le chargement frontal et le premier rotor (6) comporte deux tronçons tubulaires (12, 13), à savoir un tronçon tubulaire de traversée et un tronçon tubulaire de tube de freinage.

2. Station à poste tubulaire selon la revendication 1, caractérisée en ce que le deuxième rotor (7) est susceptible d'être fixé aussi bien à l'un des deux plateaux intégrés (1, 2) ou à un élément rigidement fixé à ces plateaux qu'également au premier rotor (6), par exemple chaque fois par un électroaimant.

3. Station à poste tubulaire selon la revendication 1 ou 2, caractérisée en ce qu'un tronçon d'enveloppe tubulaire (25), qui enveloppe le premier rotor (6) pour une position correspondante des deux rotors (6, 7), est relié au deuxième rotor (7).
